(19) **Europäisches Patentamt / European Patent Office / Office européen des brevets**

(11) **EP 3 442 840 B1**

(12) **FASCICULE DE BREVET EUROPEEN**

(45) Date de publication et mention de la délivrance du brevet:
**29.07.2020 Bulletin 2020/31**

(21) Numéro de dépôt: **17716959.6**

(22) Date de dépôt: **21.03.2017**

(51) Int Cl.:
**B60W 30/095** (2012.01)

(86) Numéro de dépôt international:
**PCT/FR2017/050659**

(87) Numéro de publication internationale:
**WO 2017/178722 (19.10.2017 Gazette 2017/42)**

(54) **DISPOSITIF DE SUIVI DE TRAJECTOIRE D'UN VÉHICULE**

VORRICHTUNG ZUR VERFOLGUNG DES WEGES EINES FAHRZEUGS

DEVICE FOR TRACKING THE PATH OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.04.2016 FR 1653239**

(43) Date de publication de la demande:
**20.02.2019 Bulletin 2019/08**

(73) Titulaire: **Renault SAS**
**92100 Boulogne Billancourt (FR)**

(72) Inventeurs:
 • **DAVINS-VALLDAURA, Joan**
   **75007 PARIS (FR)**
 • **BALLESTEROS TOLOSANA, Iris**
   **91400 ORSAY (FR)**
 • **VIGNAUD, Jean Philippe**
   **78180 MONTIGNY LE BRETONNEUX (FR)**
 • **PLESTAN, Franck**
   **44321 NANTES CEDEX3 (FR)**
 • **MOUSSAOUI, Said**
   **44321 NANTES CEDEX 3 (FR)**

(56) Documents cités:
**EP-A1- 2 642 464      EP-A2- 1 661 793**
**WO-A2-2013/178899**

EP 3 442 840 B1

**Description**

Les travaux menant à la présente invention ont bénéficié d'un soutien financier du Fonds de recherche du charbon et de l'acier de la Communauté européenne en vertu de la *convention de subvention* n° 607957.

L'invention concerne de manière générale un dispositif d'élaboration en temps réel de contrôle de trajectoire de véhicule. L'invention concerne plus précisément un dispositif observateur pour générer en temps réel un vecteur d'état estimé de suivi de trajectoire d'un véhicule, notamment d'un véhicule automobile autonome, c'est-à-dire d'un véhicule pouvant se déplacer sans conducteur humain.

Les dispositifs observateurs d'état sont déjà connus dans de nombreux domaines techniques, y compris dans celui de l'automobile.

Par exemple le brevet EP0723902B1 divulgue un système d'estimation de l'état d'un véhicule comportant un observateur qui estime une quantité non observable de l'état du véhicule à partir d'une quantité observable mesurée et d'une variable de control captée, estimation faite en relation avec un système matriciel comprenant une variable de système captée. L'observateur breveté comprend des moyens de correction de pôle en réponse à la variable de système captée. La variable de système captée porte par exemple sur le poids ou la vitesse du véhicule. Si peu ou pas de variation de poids au cours d'une même phase de roulage influence la correction, les nombreuses variations de vitesses influencent constamment la correction. Si les moyens divulgués qui corrigent un pôle en faisant simplement intervenir un coefficient inversement proportionnel à la vitesse, peuvent convenir pour un système simple limité à deux pôles, il apparaît difficile de les adapter à des systèmes plus complexes. Le problème posé est celui de réaliser un observateur qui convienne aussi bien pour un système complexe que pour un système simple.

Par exemple encore le brevet US7908112 divulgue un observateur dynamique pour l'estimation de la vitesse latérale d'un véhicule. L'estimation repose sur un modèle bicyclette et un modèle des pneumatiques qui prennent en compte les non-linéarités de la dynamique réelle dans laquelle intervient la vitesse longitudinale du véhicule. Si la méthode employée permet une estimation acceptable de variable scalaire telle que la vitesse latérale, elle ne permet pas une estimation précise d'un vecteur d'état car l'observateur de Luenberger utilisé est de construction linéaire. Le problème posé est celui de réaliser un observateur pour générer un vecteur d'état estimé de suivi de trajectoire qui convienne sur au moins une large plage de vitesses.

WO 2013/178899 A2 divulgue un autre dispositif de contrôle de trajectoire d'un véhicule de l'état de la technique.

L'invention a pour objectif de répondre aux problèmes posés par l'état antérieur de la technique, notamment en termes d'efficacité et de facilité de mise en œuvre.

Pour atteindre cet objectif, l'invention a pour objet un dispositif observateur pour générer en temps réel un vecteur d'état estimé de suivi de trajectoire d'un véhicule se déplaçant à une vitesse actuelle, à partir d'une commande et d'un vecteur de mesure actuelle corrélée à un vecteur d'état physique de suivi de trajectoire du véhicule, comprenant un premier module qui calcule en temps réel le vecteur d'état estimé de suivi de trajectoire et un vecteur de mesure estimée corrélée au vecteur d'état estimé, caractérisé en ce qu'il comprend :

- un deuxième module qui ajuste en temps réel une variation temporelle de vecteur d'état estimé pour réduire un écart entre le vecteur de mesure actuelle et le vecteur de mesure estimée en multipliant ledit écart par une matrice de gain d'estimation calculée par sommation pondérée en temps réel d'une première matrice de gain d'estimation optimisée pour une première vitesse inférieure ou égale à ladite vitesse actuelle et d'une deuxième matrice de gain d'estimation optimisée pour une deuxième vitesse supérieure ou égale à ladite vitesse actuelle, un premier coefficient de pondération de la première matrice de gain d'estimation décroissant de l'unité à zéro et un deuxième coefficient de pondération de la deuxième matrice de gain d'estimation croissant de zéro à l'unité, respectivement avec un taux de décroissance et un taux de croissance qui s'affaiblissent au fur et à mesure que ladite vitesse actuelle s'éloigne de la première vitesse pour se rapprocher de la deuxième vitesse.

Particulièrement, le premier coefficient de pondération est fonction d'un rapport faisant intervenir une différence entre la deuxième vitesse et la vitesse actuelle au numérateur et une différence entre la deuxième vitesse et la première vitesse au dénominateur et le deuxième coefficient de pondération est complémentaire à l'unité du premier coefficient de pondération.

Avantageusement, le premier coefficient de pondération est fonction d'un rapport faisant intervenir une différence entre ladite deuxième vitesse et ladite vitesse actuelle au moins au numérateur et au moins une différence entre ladite vitesse actuelle et ladite première vitesse au dénominateur et en ce que ledit deuxième coefficient de pondération est complémentaire à l'unité du premier coefficient de pondération.

Plus particulièrement, le premier coefficient de pondération est fonction d'un rapport faisant intervenir de plus une troisième vitesse inférieure à ladite première vitesse et/ou une quatrième vitesse supérieure à ladite deuxième vitesse.

De préférence, le dispositif comprend en mémoire une liste ordonnée de vitesses préfixées, une liste de matrices optimisée indexées chacune sur une vitesse préfixée et un mécanisme numérique pour sélectionner à partir de la vitesse actuelle, d'une part la première vitesse avec la première matrice de gain d'estimation parmi l'une des vitesses préfixées et d'autre part la deuxième vitesse avec la deuxième matrice de gain d'estimation parmi l'une des vitesses préfixées suivantes.

Particulièrement, la liste ordonnée comprend plus de deux vitesses préfixées de sorte que l'écart entre une vitesse préfixée non extrême de la liste ordonnée et la vitesse préfixée suivante est supérieur à l'écart entre la vitesse préfixée non extrême de la liste ordonnée et la vitesse préfixée précédente.

Avantageusement aussi, le vecteur de mesure actuelle comprend des coordonnées relatives à une vitesse de lacet et à un angle de braquage et le vecteur d'état estimé comprend des coordonnées relatives à la vitesse de lacet, à un angle d'écart relatif à une trajectoire du véhicule, à une dérivée temporelle d'angle de braquage et à l'angle de braquage.

Avantageusement encore, le dispositif comprend en mémoire une valeur seuil de vitesse en deçà de laquelle le suivi de trajectoire du véhicule peut se caler sur une trajectoire de véhicule cible et au-delà de laquelle le suivi de trajectoire du véhicule se cale sur une voie de chaussée.

Particulièrement pour se caler sur la trajectoire de véhicule cible, le vecteur de mesure actuelle comprend de plus au moins une coordonnée relative à un écart latéral du véhicule cible et le vecteur d'état estimé comprend de plus des coordonnées relatives à une dérivée temporelle d'écart à une trajectoire de véhicule cible, à un écart à la trajectoire du véhicule cible, et à un rayon de courbure de la trajectoire du véhicule cible.

Alternativement pour se caler sur la voie de chaussée, le vecteur de mesure actuelle comprend de plus des coordonnées relatives à l'angle d'écart relatif à la trajectoire du véhicule, à l'écart latéral à la trajectoire du véhicule de suivi de voie et à l'opposé de l'intégrale temporelle d'écart latéral à la trajectoire, et le vecteur d'état estimé comprend de plus des coordonnées relatives à une dérivée temporelle d'écart latéral à la trajectoire du véhicule, à l'écart latéral à la trajectoire du véhicule, et à l'opposé de l'intégrale temporelle d'écart latéral à la trajectoire.

D'autres caractéristiques et avantages apparaîtront à la lecture de la description qui suit, en référence aux dessins annexés dans lesquels :

- la figure 1 représente un véhicule auquel l'invention est applicable,
- la figure 2 est un schéma de mise en œuvre du dispositif conforme à l'invention,
- la figure 3 est une courbe de variation de coefficients d'interpolation linéaire par morceaux,
- la figure 4 est une courbe de variation de coefficients d'interpolation préférée de l'invention.

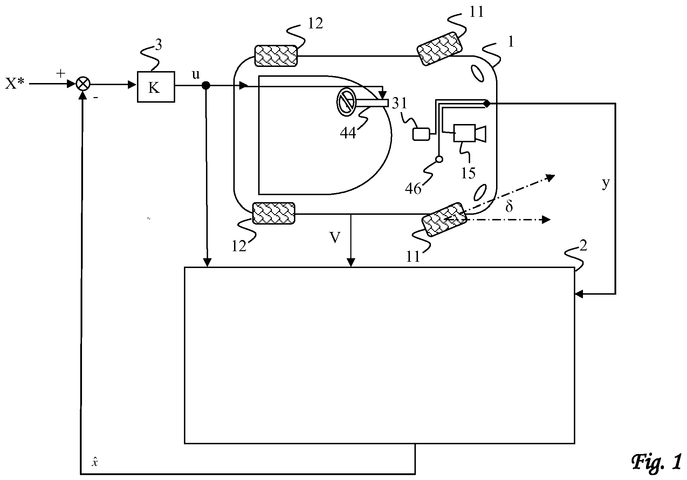

En référence à la figure 1, un véhicule 1 automobile, à traction entraîné par un moteur (non représenté sur les figures), comporte quatre roues comprenant deux roues avant 11 et deux roues arrière 12. Chaque roue est équipée ou non respectivement d'un capteur de vitesse instantanée permettant de connaître une vitesse actuelle $v_a$ du véhicule, notamment une vitesse actuelle $v_a$ longitudinale du véhicule. Ce sont de préférence les roues avant qui sont directrices et qu'il est possible de braquer pour modifier la direction du véhicule.

Le véhicule 1 comporte une colonne de direction 44 dont la partie haute est équipée ou non d'un volant, ce dernier devenant inutile pour un véhicule purement autonome, et dont la partie basse agit sur un organe de direction qui permet d'orienter les roues avant. La colonne de direction 44 est équipée d'un actionneur piloté par un signal de commande u. L'organe de direction est équipé d'un capteur 46 à la base de la colonne de direction ou à tout autre endroit, par exemple d'une crémaillère agissant sur les roues avant, pour mesurer un angle de braquage $\delta$ effectif des roues avant du véhicule. Le capteur 46 est par exemple un capteur de couple dont la valeur est aisément convertie en angle de braquage.

Le véhicule 1 comporte également un capteur 31 de la vitesse de lacet $\dot{\psi} = \partial\Psi/\partial t$ du véhicule, c'est-à-dire de la vitesse de rotation du véhicule autour de son centre de gravité suivant un axe vertical. Le capteur 31 est par exemple un gyromètre situé très proche du centre de gravité (CoG pour center of gravity en anglais) du véhicule. Un appareil 15 de type RaCam, c'est-à-dire combinant les propriétés d'une caméra optique et d'un radar, permet de mesurer des coordonnées d'objets $Y_{CAM}$ transversales à un axe médian du véhicule et $X_{CAM}$ selon l'axe médian vers l'avant du véhicule 1.

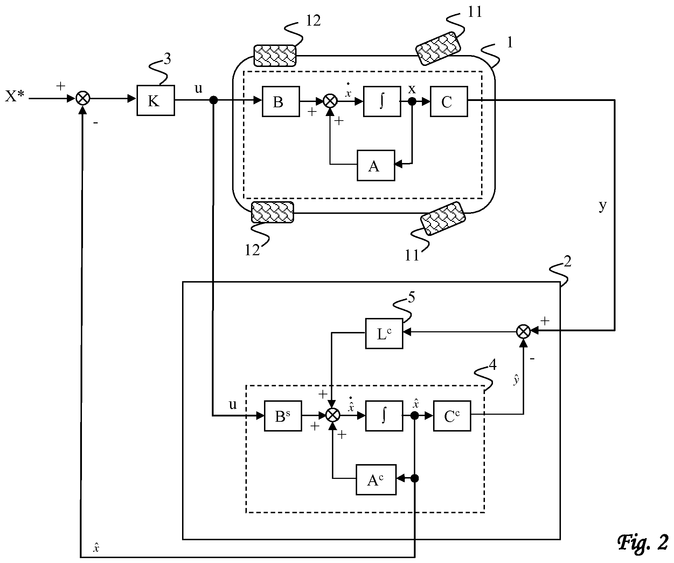

Le véhicule 1 est équipé de manière connue en soi d'un calculateur embarqué (non représenté en tant que tel) permettant de contrôler et de commander différents organes du véhicule. Le calculateur peut recevoir par des connexions, notamment par un bus CAN, Lin ou Ethernet automobile, des informations en provenance des capteurs de vitesse, du capteur 31 de vitesse de lacet, du capteur 46 de l'angle de braquage $\delta$ et de l'appareil 15. Le calculateur embarqué peut aussi commander la colonne de direction 44 en lui communiquant le signal de commande u. Le calculateur embarqué peut héberger en outre, un dispositif contrôleur 3 pour générer le signal de commande u de façon à rendre conforme un vecteur d'état physique x du véhicule à un vecteur d'état de consigne X* pour assurer un suivi de trajectoire souhaitée par le véhicule 1. L'état physique du véhicule dépend de nombreuses données physiques plus ou moins bien maîtrisées qui agissent sur son comportement dynamique. Le calculateur embarqué héberge un dispositif observateur 2 pour générer en temps réel un vecteur d'état estimé $\hat{x}$ de suivi de trajectoire du véhicule 1 se déplaçant à la vitesse $v_a$ actuelle, à partir de la commande u et d'un vecteur de mesure actuelle y corrélée au vecteur d'état physique x de suivi de trajectoire du véhicule 1, comme expliqué à présent en référence à la figure 2.

Dans le mode de réalisation illustré par la figure 2, on considère un vecteur d'état x effectif du véhicule 1 comprenant plus de deux coordonnées scalaires, ou variables d'état, parmi lesquelles on peut citer par exemple dans un ordre préétabli quelconque mais préférentiellement de manière définitive pour un véhicule donné, une vitesse de

$$\dot{\psi}_{ef} = \partial\Psi / \partial t$$

lacet effective du véhicule, un angle $\Psi_{re1,ef}$ d'écart relatif effectif du véhicule à sa trajectoire idéale et

$$\dot{Y}_{CoG,ef} = \partial Y_{CoG} / \partial t$$

une vitesse latérale effective d'éloignement du centre de gravité du véhicule par rapport à sa trajectoire idéale. L'angle $\Psi_{re1,ef}$ d'écart relatif effectif est l'angle que fait effectivement l'axe médian du véhicule avec

$$\dot{Y}_{CoG,ef} = \partial Y_{CoG} / \partial t$$

la tangente à la trajectoire idéale à chaque instant considéré. La vitesse latérale effective d'éloignement du centre de gravité est la vitesse à laquelle le centre de gravité du véhicule s'éloigne effectivement de la trajectoire idéale, perpendiculaire à la tangente à la trajectoire idéale à l'instant considéré. Le vecteur d'état x effectif du véhicule 1 peut comprendre d'autres coordonnées scalaires comme par exemple l'éloignement effectif $Y_{cog,ef}$ du centre de gravité du véhicule par rapport à sa trajectoire idéale, la variation effective $\dot{\delta}_{ef} = \partial\delta / \partial t$ d'angle de braquage des roues du véhicule au cours du temps, et l'angle de braquage effectif $\delta_{ef}$ des roues.

Les variables d'état peuvent avoir une signification indépendante du mode dans lequel fonctionne le véhicule ou une signification propre au mode dans lequel fonctionne le véhicule. A titre illustratif, considérons par exemple deux modes de fonctionnement, un mode dit AutoSteer dans lequel le véhicule est asservi à suivre un véhicule cible qui le précède et un autre mode dit LCA dans lequel le véhicule est asservi à suivre une ligne directrice de voie de circulation sur la chaussée. La vitesse de lacet qui est la vitesse avec laquelle le véhicule pivote autour d'un axe perpendiculaire au plan de la chaussée, est indépendant du mode de fonctionnement. Il en est de même de la variation effective $\dot{\delta}_{ef} = \partial\delta / \partial t$ d'angle de braquage des roues du véhicule au cours du temps, et de l'angle de braquage effectif $\delta_{ef}$ des roues car ces variables sont liées à l'état des roues elles-mêmes par rapport au châssis du véhicule asservi. Par contre l'éloignement effectif $Y_{cog,ef}$ du centre de gravité du véhicule asservi par rapport à sa trajectoire idéale est l'écart latéral entre la trajectoire du véhicule cible et le centre de gravité du véhicule asservi sur un axe perpendiculaire à l'axe du véhicule en mode AutoSteer alors qu'il est l'écart latéral entre la ligne directrice de la voie et le centre de gravité du véhicule asservi

$$\dot{Y}_{CoG,ef} = \partial Y_{CoG} / \partial t$$

sur l'axe perpendiculaire à l'axe du véhicule en mode LCA. La vitesse latérale effective d'éloignement du centre de gravité est la variation temporelle de la variable précédente.

Le vecteur d'état x effectif du véhicule 1 peut aussi comprendre des coordonnées scalaires différentes en nombre et/ou en nature selon le mode de fonctionnement du véhicule. En reprenant l'exemple illustratif ci-dessus, une variable d'état facultative $\rho_{fv}$ peut représenter le rayon de courbure de la trajectoire du véhicule cible au centre de gravité du véhicule asservi à éloignement effectif $Y_{cog,ef}$ nul du centre de gravité en mode AutoSteer. Différemment, une variable d'état facultative $\int -Y_{COG}dt$ peut représenter une intégrale temporelle des écarts du centre de gravité du véhicule asservi par rapport au point de la ligne directrice de la voie sur lequel il devrait être.

A ce vecteur X d'état effectif du véhicule 1 correspond un vecteur X* d'état de référence que l'on souhaite être atteint à chaque instant de roulage du véhicule asservi. Par exemple aux coordonnées $\dot{\psi}_{ef}$, $\Psi_{re1,ef}$, $\dot{Y}_{CoG,ef}$, $Y_{CoG,ef}$ du vecteur d'état X correspondent des coordonnées $\dot{\psi}_{ref}$, $\Psi_{ref}$, $\dot{Y}_{CoG,ref}$, $Y_{CoG,ref}$ du vecteur d'état X* de valeurs nulles car on souhaite bien entendu une absence d'écart latéral et d'écart directionnel entre la trajectoire effective du véhicule asservi et sa trajectoire idéale.

Le vecteur X d'état effectif du véhicule 1 est inconnu car l'état interne du véhicule asservi régi par les lois naturelles de la physique, est inaccessible dans sa totalité.

On rappelle que les lois connues de la physique posent qu'un vecteur x d'évolution temporelle du vecteur X d'état du système physique constitué par le véhicule 1, est lié au vecteur X d'état par une relation dynamique A qui, en absence de perturbation extérieure, tend généralement à amener l'état du véhicule à un état final stable. L'état final stable du véhicule n'étant pas nécessairement celui que l'on cherche à atteindre, le but de l'invention est de produire une commande u qui perturbe en permanence le système pour maintenir le vecteur X d'état effectif conforme au vecteur X* d'état de référence. La perturbation ainsi provoquée sur le vecteur x d'évolution temporelle, est liée à la commande u par une relation invasive B, elle aussi régie par les lois de la physique. D'autres perturbations extérieures, de nature globalement inconnues, agissant aussi sur le système physique constitué par le véhicule 1, on emploi un mécanisme d'asservissement à contre-réaction dans lequel le dispositif observateur 2 a pour but de générer en temps réel un vecteur $\hat{x}$ d'état estimé représentant le plus fidèlement possible le vecteur X d'état effectif.

Pour atteindre son but, le dispositif observateur 2 comprend un module 4 qui modélise le système physique constitué par le véhicule 1, notamment en termes de suivi de trajectoire. Le module 4 comporte une matrice numérique $A^c$ représentative de la relation dynamique A et une matrice numérique $B^s$ représentative de la relation invasive B.

La matrice numérique $A^c$ peut avoir différentes formes, chacune adaptée à un mode de fonctionnement du véhicule. La forme de la matrice numérique $A^c$ est essentiellement liée au vecteur X d'état du véhicule 1 et à la relation dynamique appliquée. Les deux exemples de forme exposés ci-dessous, se basent sur le modèle bicyclette bien connu dans le domaine technique considéré, comme l'illustrent de nombreux documents antérieurs tels que FR2925005 ou WO2012084465.

Un premier exemple est celui du mode AutoSteer, pour lequel la matrice numérique $A^c$ a la forme suivante :

$$A^c = \begin{pmatrix} a_{11}(v) & a_{12} & a_{13}(v) & 0 & 0 & a_{16} & 0 \\ 1 & 0 & 0 & 0 & 0 & 0 & a_{27}(v) \\ a_{31}(v) & a_{32} & a_{33}(v) & 0 & 0 & a_{36} & a_{37}(v) \\ 0 & 0 & 1 & 0 & 0 & 0 & 0 \\ 0 & 0 & 0 & 0 & a_{55} & a_{56} & 0 \\ 0 & 0 & 0 & 0 & 1 & 0 & 0 \\ 0 & 0 & 0 & 0 & 0 & 0 & a_{77} \end{pmatrix}$$

Dans laquelle certains coefficients sont variables et d'autres sont constants au cours d'une même séquence de roulage.

Les coefficients variables sont essentiellement ceux qui dépendent de la vitesse v longitudinale du véhicule. Pour s'adapter aux variations de vitesse, les coefficients variables sont recalculés en temps réel en lisant d'une part la vitesse v longitudinale généralement accessible sur le réseau embarqué (type Bus CAN, LIN, Ethernet automobile ou autre) et d'autre part des paramètres généralement accessibles en mémoire, au moyen des formules suivantes :

$$a_{11}(v) = \frac{-(c_r l_r^2 + c_f l_f^2)}{I_z v}$$

$$a_{13}(v) = \frac{(c_r l_r - c_f l_f)}{I_z v}$$

$$a_{31}(v) = \frac{(c_r l_r - c_f l_f)}{M v}$$

$$a_{33}(v) = \frac{-(c_r + c_f)}{M v}$$

$$a_{27}(v) = -v$$

$$a_{37}(v) = -v^2$$

Dans lesquelles les paramètres $c_r$, $c_f$, $l_r$, $l_f$, $I_z$, M quantifient de manière connue en soi par ailleurs (cf. applications FR1255068, FR1255188, ou FR12563339) chacun respectivement la rigidité de dérive des roues arrières 12 et la rigidité de dérive des roues avant 11 obtenues auprès du fournisseur de pneumatique des roues ou au moyen d'essais de roulage sur circuit, la distance de l'axe des roues arrière et la distance de l'axe des roues avant par rapport au centre de gravité CoG du véhicule 1, le moment d'inertie du véhicule autour de la perpendiculaire au plan passant par les axes de roues avant et arrière, et enfin la masse du véhicule.

Les coefficients constants au cours d'une séquence de roulage peuvent être précalculés lors de la conception du véhicule puis stockés en mémoire de calculateur embarqué. Ils sont déterminés par les formules suivantes :

$$a_{16} = \frac{c_f l_f}{I_z}$$

$$a_{36} = \frac{c_f}{M}$$

$$a_{55} = -2\xi\omega$$

$$a_{56} = -\omega^2$$

$$a_{77} = -\omega_\rho$$

Dans lesquelles d'une part $\xi$ et $\omega$ désignent respectivement un coefficient d'amortissement et une pulsation propre de la fonction de transfert de la commande de braquage des roues, et d'autre part $\omega_\rho$ désigne une pulsation propre de filtrage du rayon de courbure de la route.

Les coefficients constants au cours d'une séquence de roulage peuvent aussi être calculés à chaque démarrage du véhicule pour tenir compte d'une masse M et d'un moment d'inertie Iz qui peut être différent à chaque démarrage en fonction du nombre de passagers et du chargement. Les variations de ces paramètres, par exemple provoquées par la consommation de carburant ou un passager descendant du véhicule en cours de route, sont généralement peu significatives.

Un deuxième exemple est celui du mode LCA, pour lequel la matrice numérique $A^c$ a la forme suivante :

$$A^c = \begin{pmatrix} a_{11}(v) & a_{12} & a_{13}(v) & 0 & 0 & a_{16} & 0 \\ 1 & 0 & 0 & 0 & 0 & 0 & 0 \\ a_{31}(v) & a_{32} & a_{33}(v) & 0 & 0 & a_{36} & 0 \\ 0 & 0 & 1 & 0 & 0 & 0 & 0 \\ 0 & 0 & 0 & 0 & a_{55} & a_{56} & 0 \\ 0 & 0 & 0 & 0 & 1 & 0 & 0 \\ 0 & 0 & 0 & -1 & 0 & 0 & 0 \end{pmatrix}$$

Dans laquelle les coefficients sont identiques à ceux de la matrice numérique $A^c$ du mode AutoSteer, à l'exception de la dernière colonne où ils sont tous nuls et de la dernière ligne où seul le coefficient médian n'est pas nul mais égal à -1.

Le nombre de colonnes de la matrice est égal au nombre de coordonnée du vecteur d'état et le nombre de lignes est égal au nombre de coordonnées du vecteur de variation temporelle d'état, c'est-à-dire égal au nombre de lignes. On comprendra que la matrice numérique $A^c$ peut comporter des nombres de lignes et de colonnes différents de ceux des exemples ci-dessus, notamment supérieur si le besoin se fait ressentir de considérer une variable d'état supplémentaire ou inférieure si on considère inutile une variable d'état, notamment la variable d'état correspondant à la dernière ligne comme expliqué ci-dessus.

La matrice numérique $B^s$ représentative de la relation invasive B, chacune adaptée à un mode de commande du véhicule et de prise en compte de facteurs extérieurs. La forme de la matrice numérique $B^s$ est essentiellement liée au vecteur X d'état dont le nombre de coordonnées fixe le nombre de lignes et aux interactions avec le système dont le nombre fixe le nombre de colonnes. Les deux exemples principaux de forme exposés ci-dessous, correspondent aux deux exemples exposés ci-dessus.

Le premier exemple est celui du mode AutoSteer, pour lequel la matrice numérique $B^s$ a la forme suivante :

$$B^s = \begin{pmatrix} 0 & 0 \\ 0 & 0 \\ 0 & 0 \\ 0 & 0 \\ b_{51} & 0 \\ 0 & 0 \\ 0 & b_{72} \end{pmatrix}$$

Dans laquelle la première colonne est associée à la première perturbation qui est la commande u de braquage et la deuxième colonne est associée à la deuxième perturbation qui est une pulsation propre $\omega_n$ de variation aléatoire du rayon de courbure de la voie de circulation. Les coefficients sont ici tous constants pour un type donné de véhicule. Dans la première colonne, seul le coefficient $b_{51}$ est non nul en considérant que la commande u agit directement uniquement sur la variation temporelle d'angle de braquage. Le coefficient $b_{51}$ est égal au carré de la pulsation propre $\omega$ de la fonction de transfert de la commande de braquage des roues. Dans la deuxième colonne, seul le coefficient $b_{72}$ est non nul en considérant que la pulsation propre $\omega_n$ de variation aléatoire concerne uniquement le rayon de courbure de la voie. Le coefficient $b_{72}$ est égal à la pulsation propre $\omega_\rho$ relative au filtrage du rayon de courbure de la route, les pulsations propres étant déterminées a priori, elles sont temporellement invariantes.

Une variante de matrice numérique $B^s$ pour le mode AutoSteer du premier exemple, serait celle où le vecteur X d'état ne contiendrait pas la dernière coordonnée relative au rayon de courbure. Dans ce cas, les perturbations de variation de rayon de courbure ne seraient pas prises en compte et la matrice numérique $B^s$ n'aurait qu'une seule colonne à six lignes.

Le deuxième exemple est celui du mode LCA, pour lequel la matrice numérique $B^s$ a la forme suivante :

$$B^s = \begin{pmatrix} 0 & 0 \\ 0 & -v \\ 0 & -v^2 \\ 0 & 0 \\ b_{51} & 0 \\ 0 & 0 \\ 0 & 0 \end{pmatrix}$$

Dans laquelle la première colonne est ici encore associée à la première perturbation qui est la commande u de braquage alors que la deuxième colonne est associée à une deuxième perturbation qui est le rayon de courbure de la voie de circulation lui-même. Le coefficient $b_{51}$ est ici encore égal au carré de la pulsation propre $\omega$ de la fonction de transfert de la commande de braquage des roues. Dans la deuxième colonne par contre, deux coefficients $b_{22}$ et $b_{32}$ sont non nuls en considérant que le rayon de courbure $\rho_{ref}$ agit directement sur l'angle $\Psi_{re1,ef}$ d'écart relatif effectif du

$$\dot{Y}_{CoG,ef} = \partial Y_{CoG} \big/ \partial t$$

véhicule à sa trajectoire idéale et sur la vitesse latérale effective d'éloignement du centre de gravité du véhicule par rapport à sa trajectoire idéale. Le coefficient $b_{22}$ est égal à l'opposé de la vitesse longitudinale v de véhicule et le coefficient $b_{32}$ est égal à l'opposé du carré de la vitesse longitudinale v de véhicule.

Pour modéliser le véhicule 1, le module 4 reçoit la commande u de façon à générer le vecteur $\hat{x}$ d'état estimé en reproduisant les équations de la dynamique au moyen des matrices numériques $A^c$ et $B^s$ intervenant dans les formules :

$$\hat{x} = \int \dot{\hat{x}}$$

$$\dot{\hat{x}} = A^c\hat{x} + B^s u$$

Plusieurs conditions devraient être satisfaites pour que le vecteur $\hat{x}$ d'état estimé reproduise fidèlement le vecteur x d'état physique du véhicule.

Dans la première formule qui est une intégrale par rapport au temps, il faudrait qu'à un instant initial, le vecteur x d'état estimé soit égal au vecteur x d'état physique du véhicule.

Dans la seconde formule, il faudrait que les matrices numériques $A^c$ et $B^s$ modélisent parfaitement la relation dynamique A et la relation invasive B qui impactent réellement le véhicule.

On conçoit bien que ces conditions ne peuvent pas être satisfaites pour de nombreux motifs tels que l'exactitude des paramètres qui qualifient le véhicule alors qu'ils sont soumis aux dispersions de fabrication et au vieillissement d'usage, les perturbations imprévues et bien d'autres motifs connus ou inconnus.

Pour réduire l'écart entre le vecteur $\hat{x}$ d'état estimé qui est calculé, et le vecteur x d'état physique du véhicule qui est inconnu, l'observateur 2 reçoit sur une deuxième entrée, un vecteur y de mesure actuelle qui sont représentatives de l'état du véhicule. Le vecteur y de mesure actuelle est corrélé au vecteur x d'état physique par une relation instrumentale C qui dépend de la configuration du vecteur d'état, c'est-à-dire du mode de fonctionnement du véhicule, et des capteurs de mesure qui équipent le véhicule.

Reprenant le premier exemple pour le mode de fonctionnement AutoSteer, le vecteur y de mesure actuelle a trois composantes qui sont la vitesse de lacet $\dot{\psi}$ telle qu'elle est mesurée par le capteur 31, la coordonnée $Y_{CAM}$ transversale du centre de la face arrière du véhicule cible (non représenté) par rapport à l'axe médian du véhicule 1 tel qu'il est mesuré par l'appareil 15 et l'angle $\delta$ de braquage des roues 11 tel qu'il est mesuré par le capteur 46.

A titre illustratif, la variable d'état $Y_{COG}$ qui est la troisième coordonnée du vecteur X d'état est donnée par la formule :

$$Y_{COG} = x_m \cdot \Psi_{rel} + Y_{CAM} + \frac{-x_m^2}{2} \cdot \rho_{fv}$$

Dans laquelle $x_m$ est égale à la somme d'une distance entre le véhicule 1 et le véhicule cible à respecter en cas d'arrêt des deux véhicules, par exemple de l'ordre de 2 mètres, et d'un produit de la vitesse v longitudinale du véhicule 1 multipliée par une durée $t_f$ accordée au véhicule 1 pour continuer sa course de poursuite du véhicule cible, par exemple de l'ordre de 0,4 secondes.

La relation instrumentale C est approchée dans le module 4 par une matrice numérique $C^c$ pour générer un vecteur $\hat{y}$ de mesure estimée à partir du vecteur $\hat{x}$ d'état estimé.

Dans le mode de fonctionnement AutoSteer, la matrice numérique $C^c$ a de préférence la forme suivante :

$$C^C = \begin{pmatrix} c_{11} & 0 & 0 & 0 & 0 & 0 & 0 \\ 0 & c_{22}(v) & 0 & c_{24} & 0 & 0 & c_{27}(v) \\ 0 & 0 & 0 & 0 & 0 & c_{36} & 0 \end{pmatrix}$$

Dans laquelle, parmi les coefficients constants non nuls, les coefficients $c_{11}$, $c_{24}$, $c_{36}$, sont unitaires en négligeant les éventuelles incertitudes des capteurs 31, 15 et 46.

Les coefficients $c_{22}$, $c_{27}$, qui dépendent de la vitesse v longitudinale du véhicule, sont calculés en temps réel au moyen des formules simples :

$$c_{22}(v) = v \bullet t_f$$

$$c_{27}(v) = -c_{22}(v)^2/2$$

Le module 4 calcule alors le vecteur de mesure estimé $\hat{y}$ en multipliant en temps réel le vecteur $\hat{x}$ d'état estimé par la matrice $C^c$.

Reprenant le deuxième exemple pour le mode de fonctionnement LCA, le vecteur y de mesure actuelle comporte cinq composantes qui sont la vitesse de lacet $\dot{\psi}$ telle qu'elle est mesurée par le capteur 31, l'angle $\Psi_{re1}$ d'écart relatif tel qu'il est mesuré par l'appareil 15 visant une ligne médiane de la voie de circulation, l'éloignement $Y_{CoG}$ du centre de gravité par rapport à la ligne médiane de la voie de circulation tel que cet éloignement est obtenu à partir de l'appareil 15, l'angle $\delta$ de braquage des roues 11 tel qu'il est mesuré par le capteur 46 et l'accumulation $\int Y_{CoG}dt$ au cours du temps de l'opposé de l'éloignement $Y_{CoG}$ du centre de gravité fourni par l'appareil 1.

La relation instrumentale C est approchée dans le module 4 par une matrice numérique $C^c$ pour générer un vecteur $\hat{y}$ de mesure estimée à partir du vecteur $\hat{x}$ d'état estimé pour le mode de fonctionnement considéré.

Dans le mode de fonctionnement LCA, la matrice numérique $C^c$ a de préférence la forme suivante :

$$C^C = \begin{bmatrix} 1 & 0 & 0 & 0 & 0 & 0 & 0 \\ 0 & 1 & 0 & 0 & 0 & 0 & 0 \\ 0 & 0 & 0 & 1 & 0 & 0 & 0 \\ 0 & 0 & 0 & 0 & 0 & 1 & 0 \\ 0 & 0 & 0 & 0 & 0 & 0 & 1 \end{bmatrix}$$

Dans laquelle les coefficients non nuls $c_{11}$, $c_{22}$, $c_{34}$, $c_{46}$, $c_{57}$, sont constants et unitaires car les mesures considérées font partie des variables d'état.

Le module 4 calcule alors le vecteur de mesure estimé $\hat{y}$ en multipliant en temps réel le vecteur $\hat{x}$ d'état estimé par la matrice $C^c$.

Quel que soit le mode de fonctionnement du véhicule, un module 5 de gain d'estimation a pour fonction de corriger la dérivée temporelle $\dot{\hat{x}}$ du vecteur d'état pour que le vecteur de mesure estimé $\hat{y}$ à partir du vecteur $\hat{x}$ d'état estimé coïncide avec le vecteur y de mesure réelle, de sorte que le vecteur $\hat{x}$ d'état estimé coïncide ainsi avec le vecteur x d'état physique de suivi de trajectoire du véhicule 1. Pour ce faire, le module 5 ajuste en temps réel la variation temporelle $\dot{\hat{x}}$ de vecteur d'état estimé $\hat{x}$ de façon à réduire un écart entre le vecteur de mesure actuelle y et le vecteur de mesure estimée $\ddot{y}$ en multipliant l'écart par une matrice de gain d'estimation L'.

L'écart entre les deux vecteurs de mesure y et $\hat{y}$, étant un vecteur de dimension égale à celle des vecteurs de mesure et la correction à ajouter à la variation temporelle $\dot{\hat{x}}$ de vecteur d'état estimé, étant un vecteur de dimension égale à celle des vecteurs d'état, la matrice $L^c$ comporte un nombre de lignes égal au nombre de coordonnées du vecteur d'état et un nombre de colonnes égal au nombre de coordonnées du vecteur de mesure.

Ainsi, le dispositif observateur 2 peut se comporter comme un observateur de Kalman défini par l'équation :

$$\hat{x} = A^c\hat{x} + B^s u + L^c\left(y - C^c\hat{x}\right)$$

La matrice $L^c$ correspond à la matrice des gains de l'observateur de Kalman. Dans le mode de fonctionnement AutoSteer pris en exemple ci-dessus, c'est une matrice de taille 7x3 à cause du nombre de sorties égal à 7 et du nombre de mesures utilisées égal à 3. Cette matrice est déterminée en résolvant l'équation algébrique de Ricatti basée sur la minimisation d'une matrice P qui est la matrice des solutions de Ricatti. Les coefficients de la matrice P correspondent de manière connue aux covariances des erreurs d'estimation (x - $\hat{x}$):

$$\dot{P} = AP + PA^T - PC^T R_L^{-1} CP + Q_L$$
$$L = PC^T R_L^{-1}$$

Expression dans laquelle on rappelle que les matrices A et C sont celles issues des équations de la dynamique latérale, $Q_L$ est la matrice des perturbations du système et $R_L$ est la matrice de bruit des mesures.

Les matrices $Q_L$ et $R_L$ sont des matrices carrées de dimensions égales à celle du nombre de coordonnées du vecteur y de mesure et à paramètres non nuls sur la diagonale.

$$Q_L = \begin{bmatrix} q11 & 0 & 0 \\ 0 & q22 & 0 \\ 0 & 0 & q33 \end{bmatrix}; R_L = \begin{bmatrix} r11 & 0 & 0 \\ 0 & r22 & 0 \\ 0 & 0 & r33 \end{bmatrix};$$

Ces paramètres sont généralement quantifiés empiriquement à partir d'enregistrements expérimentaux réalisés au cours d'essais du véhicule en tant que système à observer, mais ce sont valeurs difficiles à déterminer. Les deux matrices sont définies diagonales car on suppose qu'il n'y a pas de corrélation entre les valeurs mesures ($\psi$, $Y_{cam}$, $\delta$). Une bonne optimisation des valeurs de $Q_L$ et $R_L$ permet d'avoir un système très robustesse par rapport aux bruits de mesure et aux perturbations du système.

Le dispositif contrôleur 3 génère la commande u de façon à réduire jusqu'à annuler la différence entre un état de référence X* et le vecteur d'état estimé $\hat{x}$. Le vecteur d'état de référence étant défini comme vecteur nul de taille 7x1, la solution proposée pour le contrôleur est exactement l'approche classique dite « retour d'état statique », lequel est défini comme :

$$u = K\hat{x}$$

La matrice K de gain, définie de taille 7x1, contient les gains de contrôle. Au total il y a sept paramètres à régler, chacun associé à une variable d'état différente :

$$K = \{K_\psi, K_{\psi_r}, K_{Y_{Cac}}, K_{Y_{Coc}}, K_\delta, K_\delta, K_\delta\}$$

La méthode d'optimisation utilisée est la méthode linéaire quadratique (LQR pour Linear-Quadratic Regulator en anglais), basée sur les équations de Ricatti et sur la minimisation de la matrice S de solutions :

$$\dot{S} = AS + SA^T - SBR_k^{-1}B^TS + Q_k$$
$$K = R_k^{-1}B^TS$$

Où ici encore les matrices A et B résultent des équations de la dynamique latérale, $Q_k$ est la matrice des poids de chacune des variables d'état et $R_k$ est la matrice des poids de la commande (en l'occurrence R est fixée à un unique scalaire car il n'y a qu'une seule commande u).

La matrice $Q_k$, qui doit être mise au point, est définie de la manière suivante :

$$Q_k = \begin{bmatrix} q11 & 0 & 0 & 0 & 0 & 0 & 0 \\ 0 & q22 & 0 & 0 & 0 & 0 & 0 \\ 0 & 0 & q33 & 0 & 0 & 0 & 0 \\ 0 & 0 & 0 & q44 & 0 & 0 & 0 \\ 0 & 0 & 0 & 0 & q55 & 0 & 0 \\ 0 & 0 & 0 & 0 & 0 & q66 & 0 \\ 0 & 0 & 0 & 0 & 0 & 0 & q77 \end{bmatrix}$$

La matrice $Q_k$ est supposée diagonale car on considère qu'il n'y a pas de corrélation entre les poids des variables d'état.

On rappelle ici rapidement le principe de séparation qui gouverne le lien entre l'optimisation de la commande dans le dispositif 3 et celle de l'observateur dans le dispositif 2 qui est très fort car la performance du contrôleur dépend directement de l'estimation de l'observateur, et la synthèse de la commande est faite à partir de la valeur estimée par l'observateur $\hat{x}$.

Considérant le système bouclé avec la commande u par retour d'état statique issu de l'observateur 2, le système à contrôler est modélisé par un système linéaire où les équations du système et de l'observateur sont définies comme :

$$\begin{cases} \dot{x} = Ax + Bu \\ \dot{\hat{x}} = A\hat{x} + Bu + L(y - C\hat{x}) \end{cases} \rightarrow \begin{cases} \dot{x} = Ax + BK\hat{x} \\ \dot{\hat{x}} = LCx + (A - LC + BK)\hat{x} \end{cases}$$

En réalisant le changement de variables $(\hat{x} \rightarrow e = x - \hat{x})$, les équations précédents sont redéfinies comme

$$\begin{cases} \dot{x} = Ax + BKx - BK(x - \hat{x}) \\ \dot{e} = (A - LC)(x - \hat{x}) \end{cases} \text{ ou } \begin{bmatrix} \dot{x} \\ \dot{e} \end{bmatrix} = \begin{bmatrix} A + BK & -BK \\ 0 & A - LC \end{bmatrix} \begin{bmatrix} x \\ e \end{bmatrix}$$

Pour garantir la stabilité du système bouclé, il convient de vérifier indépendamment la stabilité de l'observateur (A-LC) et la stabilité de la commande en utilisant l'état réel (A+BK). Cette propriété nous permet de garantir que l'optimisation de l'observateur, en d'autres termes l'optimisation de la matrice $L^c$ et l'optimisation de la commande, en d'autres termes l'optimisation de la matrice K de gains, peuvent être faites indépendamment l'une de l'autre. Ce principe est connu comme étant *le principe de séparation.*

Il reste que l'optimisation de la matrice $L^c$ nécessite de nombreux calculs et mises au point difficilement compatibles avec une exécution en temps réel pour tenir compte des variations de vitesse du véhicule qui, comme nous l'avons vu interviennent sur les valeurs des matrices.

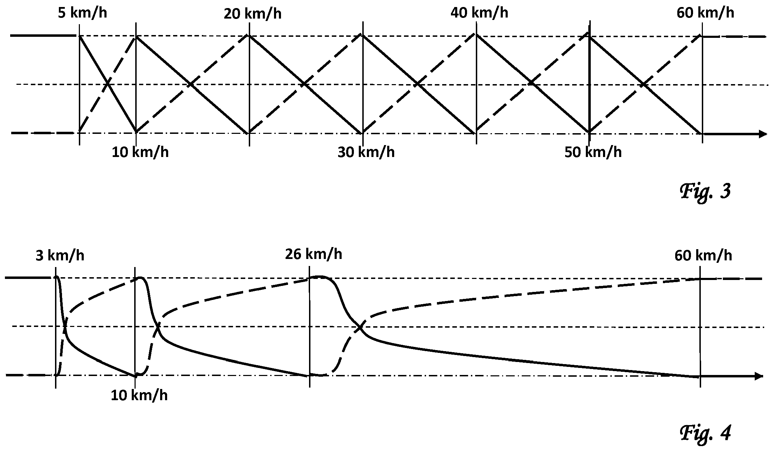

Pour s'affranchir des contraintes temporelles, la solution est alors de stocker en mémoire embarquée, pour un nombre prédéfini de valeurs fixées de vitesse longitudinale du véhicule, des matrices $L^c$ qui ont été préalablement optimisées hors ligne, en d'autres termes hors du véhicule dans une phase d'essais et de conception assistée par ordinateur. La figure 3 montre par exemple des valeurs de vitesse longitudinale du véhicule qui sont fixées successivement à 5 km/h, 10 km/h, 20 km/h, 30 km/h, 40 km/h, 50 km/h, 60 km/h. Chaque succession de deux valeurs fixées de vitesse longitudinale, définit alors une plage de vitesses comprises entre une première vitesse $v_{min}$ qui délimite la plage de vitesse par une borne inférieure et une deuxième vitesse $v_{max}$ qui délimite la plage de vitesse par une borne supérieure.

Le procédé de fabrication du dispositif observateur comporte alors une phase de conception et de mise au point du véhicule qui comprend une première étape de détermination de coefficients de matrice de gain d'estimation pour chaque borne de plage de vitesses, à savoir la détermination des coefficients d'une première matrice $L_{min}$ de gain d'estimation optimisée pour la première vitesse $v_{min}$ et la détermination des coefficients d'une deuxième matrice $L_{max}$ de gain d'estimation optimisée pour la deuxième vitesse $v_{max}$.

L'étape de détermination comprend un cycle de calcul des coefficients en utilisant une méthode connue d'optimisation, notamment celle qui met en œuvre les équations de Ricatti, par exemple mais non nécessairement de façon similaire à la méthode précédemment divulguée dans le brevet US6000661. L'étape de détermination comprend ensuite un cycle de mise au point des coefficients en essayant un véhicule prototype du véhicule 1 dans le dispositif estimateur duquel on a stocké les coefficients calculés et qu'un pilote d'essai fait rouler à la vitesse pour laquelle on a calculé les coefficients de la matrice de gain d'estimation. Le pilote d'essai ajuste alors les coefficients jusqu'à pouvoir faire rouler le véhicule avec un comportement qui donne satisfaction sans intervention du pilote d'essai sur sa conduite.

La phase de conception et de mise au point du véhicule comprend une deuxième étape de stockage des coefficients de matrice de gain d'estimation pour l'ensemble des bornes de plage de vitesses, en mémoire électronique accessible par le dispositif observateur 2. On constate aisément sur la figure 3 que pour une plage de vitesse succédant à une plage de vitesse précédente, les coefficients de la première matrice $L_{min}$ de gain d'estimation optimisée pour la première vitesse $v_{min}$ sont égaux aux coefficients de la deuxième matrice $L_{max}$ de gain d'estimation optimisée pour la deuxième vitesse $v_{max}$ de la plage précédente. De la sorte, à l'exception de la dernière plage de vitesses pour laquelle on réalise un deuxième stockage en borne supérieure, on réalise un stockage de coefficients de matrice de gain d'estimation en borne inférieure de chaque plage de vitesses dans une table associative indexée par les bornes de plage(s) de vitesses.

La phase de conception et de mise au point du véhicule comprend une troisième étape de stockage d'instructions de programme d'ordinateur en mémoire électronique exécutable par le dispositif observateur 2. Les instructions sont programmées de façon à ce que lorsqu'elles sont exécutées par le dispositif observateur, celui-ci lit la vitesse $v_a$ actuelle du véhicule sur le bus de réseau embarqué de manière à retrouver deux bornes de plage de vitesse qui encadrent la vitesse $v_a$ actuelle. En accédant à la table associative qui contient les coefficients de matrice de gain d'estimation, la suite des instructions stockées permet au deuxième module 5 de calculer la matrice de gain d'estimation $L^c$ par sommation pondérée en temps réel d'une première matrice de gain d'estimation $L_{min}$ optimisée pour une première vitesse $v_{min}$ inférieure ou égale à la vitesse $v_a$ actuelle et d'une deuxième matrice de gain d'estimation $L_{max}$ optimisée pour une deuxième vitesse $v_{max}$ supérieure ou égale à ladite vitesse $v_a$ actuelle, un premier coefficient de pondération $p_{min}$ de la première matrice de gain d'estimation $L_{min}$ décroissant de l'unité à zéro et un deuxième coefficient de pondération $p_{max}$ de la deuxième matrice de gain d'estimation $L_{max}$ étant le complément à l'unité du premier coefficient de pondération. De la sorte, les instructions de programme stockées permettent d'obtenir la matrice par interpolation entre deux valeurs aux bornes de la plage de vitesse qui contient la vitesse actuelle longitudinale du véhicule.

La phase de conception et de mise au point du véhicule comprend une quatrième étape d'essai du véhicule prototype du véhicule 1 dans le dispositif estimateur duquel on a stocké les instructions de programme d'ordinateur en mémoire électronique exécutable par le dispositif observateur 2. Le pilote d'essai fait rouler le véhicule à différentes vitesses autres que celles pour lesquelles on a calculé les coefficients de matrice de gain d'estimation stockés en table associative. Le pilote d'essai vérifie alors que les instructions stockées en combinaison avec la table associative, permettent de faire rouler le véhicule avec un comportement qui donne satisfaction sans intervention du pilote d'essai sur sa conduite pour toute vitesse actuelle prévue du véhicule.

La figure 3 montre un exemple d'interpolation linéaire dans laquelle le premier et le deuxième coefficient de pondération croît et respectivement décroît de manière constante. Il convient de choisir un nombre suffisant de plages de vitesses pour obtenir une bonne approximation de matrice de gain d'estimation à l'intérieur des plages de vitesses. Cette approche présente plusieurs inconvénients. L'inconvénient de consommer beaucoup de mémoire pour stocker les valeurs de coefficients de matrice aux bornes des plages de vitesses, est surmontable avec les baisses constantes de prix et d'encombrement des mémoires électroniques. Un inconvénient plus difficilement surmontable apparaît dans le cycle de mise au point des coefficients en essayant en vrai grandeur le véhicule prototype du véhicule 1. Le pilote d'essai doit alors faire rouler le véhicule à chaque vitesse pour laquelle la matrice de gain d'estimation a été préalablement calculée, soit à sept vitesses testées dans le cas illustré par la figure 3. Dans le mode de fonctionnement autonome AutoSteer pris en exemple ci-dessus, la matrice de gain d'estimation de taille 7x3 génère jusqu'à 21 paramètres que le pilote d'essai doit alors ajuster pour une vitesse testée jusqu'à pouvoir faire rouler le véhicule avec un comportement qui donne satisfaction sans son intervention. Pour faire rouler le véhicule jusqu'à 40 km/h dans ce mode de fonctionnement, on constate sur la figure 3 qu'un ajustement est nécessaire pour cinq vitesses fixées à 5 km/h, 10 km/h, 20 km/h, 30 km/h et 40 km/h. Les inventeurs ont identifié ici 66 paramètres à ajuster. Dans le mode de fonctionnement autonome LCA pris en exemple ci-dessus, la matrice de gain d'estimation de taille 7x5 génère jusqu'à 35 paramètres que le pilote d'essai doit alors ajuster pour une vitesse testée jusqu'à pouvoir faire rouler le véhicule avec un comportement qui donne satisfaction sans son intervention. Pour faire rouler le véhicule de 40 à 180 km/h dans ce mode de fonctionnement, on constate en extrapolant la figure 3 qu'un ajustement est nécessaire pour quinze vitesses fixées de 10 en 10 de 40 km/h à 180 km/h. Les inventeurs ont identifié ici 126 paramètres à ajuster. Le pilote d'essai doit ainsi mettre au point 192 paramètres. Il faut comprendre que la mise au point ne se fait pas simplement de façon séquentielle en ajustant un paramètre sans conséquence sur les paramètres précédemment ajusté. L'ajustement d'un paramètre peut nécessiter un réajustement de paramètres précédemment ajustés. Une solution pourrait être de réduire le nombre de plages de vitesses mais alors l'approximation par une fonction affine sur une trop grande plage de vitesses risque de nuire à l'exactitude et par conséquent à la performance de correction apportée par la matrice $L^c$.

Pour remédier aux inconvénients ci-dessus exposés, les inventeurs ont développé un outil de simulation hébergé sur un système informatique doté de ressources calculatoires élevées comparables à celles d'un système de conception assistée par ordinateur et non soumis à des contraintes d'exécution en temps réel. L'outil de simulation est programmé pour effectuer l'intégralité des calculs numériques nécessités par les équations théoriques ci-dessus exposées en incrémentant progressivement des valeurs de vitesse longitudinales de véhicule avec un pas d'incrémentation suffisamment faible pour simuler la dynamique du véhicule et pour estimer la performance pour des valeurs quasi continues de la vitesse. L'outil a aussi permis de mettre en évidence une allure d'évolution des coefficients de la matrice de gain d'estimation en fonction d'une évolution croissante de la vitesse longitudinale. La connaissance de cette allure d'évolution des coefficients de la matrice de gain d'estimation a permis d'allonger les plages de vitesses et par conséquent d'en réduire le nombre en effectuant une interpolation entre deux bornes de vitesse par des courbes représentatives de l'évolution effective des coefficients de la matrice de gain d'estimation et non pas simplement par des droites.

En analysant les allures obtenues par l'outil de simulation qu'ils ont créé, les inventeurs ont constaté que la matrice de gain d'estimation évoluait plus rapidement pour des valeurs faibles que pour des valeurs élevées de vitesse à l'intérieur d'une même plage de vitesses. Ils ont alors programmé des instructions de programme d'ordinateur exécutables en temps réel par le dispositif estimateur pour que le premier coefficient de pondération $p_{min}$ de la première matrice de gain d'estimation $L_{min}$ décroisse de l'unité à zéro et que le deuxième coefficient de pondération $p_{max}$ de la deuxième matrice de gain d'estimation $L_{max}$ croisse de zéro à l'unité, respectivement avec un taux de décroissance et un taux de croissance qui s'affaiblissent au fur et à mesure que la vitesse $v_a$ actuelle s'éloigne de la première vitesse $v_{min}$ pour se rapprocher de la deuxième vitesse $v_{max}$.

Ces nouvelles instructions conformes à l'invention, ont permis de réduire le nombre de plages de vitesses comme le montre la figure 4 grâce à une fonction d'interpolation approchant mieux l'évolution effective de la matrice de gain d'estimation qu'une simple interpolation linéaire. L'invention facilite ainsi le cycle de mise au point au cours des essais et fiabilise la génération en temps réel du vecteur d'état estimé $\hat{x}$ de suivi de trajectoire du véhicule 1 se déplaçant à la vitesse $v_a$ actuelle, à partir de la commande u et du vecteur de mesure actuelle y corrélée au vecteur d'état physique x de suivi de trajectoire du véhicule 1 par le dispositif estimateur 2.

Il est possible d'obtenir l'affaiblissement ci-dessus mentionné pour le premier coefficient de pondération $p_{min}$ en faisant intervenir dans son calcul une différence $(v_{max} - v_a)$ entre la deuxième vitesse et la vitesse actuelle au numérateur et une différence $(v_{max} - v_{min})$ entre la deuxième vitesse et la première vitesse au dénominateur.

C'est par exemple le cas en posant :

$$p_{min} = Log \ [1+(v_{max} - v_a)/ \ (v_{max} - v_{min})]/Log2$$

Il est aussi possible d'obtenir que le deuxième coefficient de pondération $p_{max}$ soit complémentaire à l'unité du premier coefficient de pondération $p_{min}$ par exemple en posant :

$$p_{max} = Log \ [1+(v_a - v_{min})/ \ (v_{max} - v_{min})]/Log2$$

Cependant les formules logarithmiques sont déconseillées car elles sont fortement chronophages, peu ou mal adaptées aux calculs en temps réel qui se doivent d'être simples et rapides.

L'obtention de taux de décroissance et de croissance qui s'affaiblissent au fur et à mesure que la vitesse $v_a$ actuelle s'éloigne de la borne inférieure $v_{min}$ de la plage de vitesses pour se rapprocher de la borne supérieure $v_{max}$ de la plage de vitesses, au moyen de l'algorithme exposé ci-dessous, présente l'avantage de pouvoir être exécutée rapidement en temps réel sans exiger trop de ressources calculatoires.

La phase de conception et de mise au point du véhicule comprend une troisième étape de stockage. Les instructions de programme d'ordinateur stockées en mémoire électronique exécutable par le dispositif observateur 2 dans la troisième étape, sont programmées de façon à ce que lorsqu'elles sont exécutées par le dispositif observateur, elles pointent dans la table associative ci-dessus mentionnée, sur la vitesse $v_{max}$ directement supérieure à la vitesse actuelle lue sur le bus de réseau embarqué du véhicule.

Si la vitesse $v_{max}$ pointée est celle de valeur positive la plus basse de la table associative, la matrice $L^c$ est prise égale à la matrice $L_{max}$.

Sinon, les instructions pointent sur la vitesse $v_{min}$ directement inférieure à la vitesse actuelle lue sur le bus de réseau embarqué du véhicule.

Si la vitesse $v_{min}$ pointée est celle de valeur positive la plus élevée de la table associative, la matrice $L^c$ est prise égale à la matrice $L_{min}$.

Sinon, dans la mesure où la table associative est indexée par une liste ordonnée qui comprend plus de deux vitesses préfixées $v_i$, pour permettre un écart entre une vitesse préfixée $v_i$ non extrême de la liste ordonnée et la vitesse préfixée $v_{i+1}$ suivante supérieur à l'écart entre la vitesse préfixée $v_i$ non extrême de la liste ordonnée et la vitesse préfixée $v_{i-1}$ précédente, les instructions accèdent en mémoire ou par calcul à trois variables $dist^+$, $dist$ et $dist^-$ définies par les formules :

$$dist^+= v_{max2} - v_{max}$$

$$dist = v_{max} - v_{min}$$

$$dist^-= v_{min} - v_{min2}$$

Dans lesquelles $v_{max2}$ est la vitesse fixe en table associative directement supérieure à la vitesse $v_{max}$ si la vitesse $v_{max}$ n'est pas la vitesse fixe la plus élevée de la table associative ou une vitesse arbitraire au-delà de la vitesse $v_{max}$ si la vitesse $v_{max}$ est la vitesse fixe la plus élevée de la table associative, et $v_{min2}$ est la vitesse fixe en table associative directement inférieure à la vitesse $v_{min}$ si la vitesse $v_{min}$ n'est pas la vitesse fixe positive la plus basse de la table associative ou une vitesse nulle en-deçà de la vitesse $v_{min}$ si la vitesse $v_{min}$ est la vitesse fixe positive la plus basse de la table associative.

Ensuite les instructions de programme d'ordinateur calculent quatre facteurs $P_{A1}$, $P_{A2}$, $P_{B1}$, $P_{B2}$, définis par les formules suivantes :

$$P_{A1} = \frac{(v_{max} - v_a)}{dist} \qquad P_{A2} = \frac{(v_{max} - v_a)}{dist + dist^+}$$

$$P_{B1} = \frac{(v_a - v_{min})}{dist} \qquad P_{B2} = \frac{(v_a - v_{min})}{dist + dist^-}$$

A partir des quatre facteurs $P_{A1}$, $P_{A2}$, $P_{B1}$, $P_{B2}$, les instructions de programme d'ordinateur calculent les coefficients de pondération $p_{min}$ et $p_{max}$ définis par les formules suivantes :

$$p_{min} = \frac{P_{A1}P_{A2}}{P_{A1}P_{A2} + P_{B1}P_{B2}}$$

$$p_{max} = \frac{P_{B1}P_{B2}}{P_{A1}P_{A2} + P_{B1}P_{B2}} = 1 - p_{min}$$

On constate dans les formules ci-dessus que le premier coefficient de pondération $p_{min}$ est fonction d'un rapport faisant intervenir la différence entre la deuxième vitesse $v_{max}$ et la vitesse actuelle $v_a$ au numérateur et au dénominateur en faisant intervenir une deuxième différence, à savoir celle entre la vitesse actuelle $v_a$ et la première vitesse $v_{min}$ au dénominateur, le deuxième coefficient de pondération $p_{max}$ restant complémentaire à l'unité du premier coefficient de pondération $p_{min}$.

On constate aussi que les deux différences mentionnées ci-dessus interviennent chacune de manière quadratique dans les formulations des coefficients de pondération de sorte que leur allure est celle représentée en trait plein pour le coefficient de pondération $p_{min}$ et celle représentée en trait pointillé pour le coefficient de pondération $p_{max}$.

Les valeurs de 3 km/h, 10 km/h, 26 km/h, et 60 km/h, sont indiquées à titre purement illustratif et non limitatif. Ce qu'il convient de retenir est que les algorithmes de l'invention permettent de réduire le nombre de plages de vitesses et par conséquent de réduire le nombre de mises au point à effectuer. On peut très bien envisager une seule plage de vitesse dans laquelle les coefficients de pondération varient, la plage de vitesse débutant à une vitesse basse, juste suffisamment élevée pour que la matrice de gain d'estimation ait un sens, et finissant à une vitesse élevée au-delà de laquelle les variations de la matrice de gain d'estimation sont insignifiantes.

On constate encore que le rapport dont est fonction le premier coefficient de pondération $p_{min}$ fait intervenir dans cette mise en œuvre la troisième vitesse $v_{min2}$ inférieure à la première vitesse $v_{min}$ et la quatrième vitesse $v_{max2}$ supérieure à la deuxième vitesse $v_{max}$. L'intervention des plages de vitesses contigües à la plage de vitesses qui contient la vitesse $v_a$ actuelle, améliore le lissage au passage d'une plage de vitesses à la suivante mais d'autres solutions sont envisageables. Notamment, si on envisage un dénominateur pour $P_{A2}$ et pour $P_{B2}$ proportionnel à celui de $P_{A1}$, respectivement de $P_{B1}$, on voit que des simplifications dans les calculs des coefficients de pondération peuvent faire disparaître les amplitudes dist-, dist, dist+ des plages de vitesse considérées.

Le dispositif observateur comprenant en mémoire une liste ordonnée de vitesses préfixées $v_i$ et une liste de matrices optimisée $L_i$ indexées chacune sur une vitesse préfixée $v_i$, les instructions stockées de programme d'ordinateur permettent d'exécuter un mécanisme numérique pour sélectionner à partir de la vitesse actuelle, d'une part la première vitesse $v_{min}$ avec la première matrice de gain d'estimation $L_{min}$ parmi l'une des vitesses préfixées $v_i$ et d'autre part la deuxième vitesse $v_{max}$ avec la deuxième matrice de gain d'estimation $L_{max}$ prise alors égale à la vitesse préfixée suivante $v_{i+1}$.

Les instructions sont programmées pour calculer la matrice $L^c$ au moyen de la formule :

$$L^c = p_{min}\, L_{min} + p_{max}\, L_{max}$$

L'enseignement de l'invention ne se limite pas aux exemples de mise en œuvre exposés ci-dessus mais aux seules revendications énoncées ci-après. Notamment, l'exemple de mise en œuvre du dispositif observateur a été expliqué en s'appuyant sur un observateur de Kalman. L'homme du métier connaît d'autres types d'observateurs comme par exemple les observateurs de Luenberger pour lesquels il saura sans peine transposer l'enseignement ici prodigué.

**Revendications**

1. Dispositif observateur (2) pour générer en temps réel un vecteur d'état estimé ($\hat{x}$) de suivi de trajectoire d'un véhicule (1) se déplaçant à une vitesse ($v_a$) actuelle, à partir d'une commande (u) et d'un vecteur de mesure actuelle (y) corrélée à un vecteur d'état physique (x) de suivi de trajectoire du véhicule (1), comprenant un premier module (4) qui calcule en temps réel ledit vecteur d'état estimé ($\hat{x}$) de suivi de trajectoire et un vecteur de mesure estimée ($\hat{y}$) corrélée au vecteur d'état estimé ($\hat{x}$), **caractérisé en ce qu'**il comprend :

   - un deuxième module (5) qui ajuste en temps réel une variation temporelle $\left(\dot{\hat{x}}\right)$ de vecteur d'état estimé ($\hat{x}$)

pour réduire un écart entre ledit vecteur de mesure actuelle (y) et ledit vecteur de mesure estimée ($\hat{y}$) en multipliant ledit écart par une matrice de gain d'estimation ($L^c$) calculée par sommation pondérée en temps réel d'une première matrice de gain d'estimation ($L_{min}$) optimisée pour une première vitesse ($v_{min}$) inférieure ou égale à ladite vitesse ($v_a$) actuelle et d'une deuxième matrice de gain d'estimation ($L_{max}$) optimisée pour une deuxième vitesse ($v_{max}$) supérieure ou égale à ladite vitesse ($v_a$) actuelle, un premier coefficient de pondération ($p_{min}$) de la première matrice de gain d'estimation ($L_{min}$) décroissant de l'unité à zéro et un deuxième coefficient de pondération ($p_{max}$) de la deuxième matrice de gain d'estimation ($L_{max}$) croissant de zéro à l'unité, respectivement avec un taux de décroissance et un taux de croissance qui s'affaiblissent au fur et à mesure que ladite vitesse ($v_a$) actuelle s'éloigne de la première vitesse ($v_{min}$) pour se rapprocher de la deuxième vitesse ($v_{max}$).

2. Dispositif observateur selon la revendication 1, **caractérisé en ce que** ledit premier coefficient de pondération ($p_{min}$) est fonction d'un rapport faisant intervenir une différence ($v_{max} - v_a$) entre ladite deuxième vitesse et ladite vitesse actuelle au numérateur et une différence ($v_{max} - v_{min}$) entre ladite deuxième vitesse et ladite première vitesse au dénominateur et **en ce que** ledit deuxième coefficient de pondération ($p_{max}$) est complémentaire à l'unité du premier coefficient de pondération ($p_{min}$).

3. Dispositif observateur selon la revendication 1 ou 2, **caractérisé en ce que** ledit premier coefficient de pondération ($p_{min}$) est fonction d'un rapport faisant intervenir une différence ($v_{max} - v_a$) entre ladite deuxième vitesse et ladite vitesse actuelle au moins au numérateur et au moins une différence ($v_a - v_{min}$) entre ladite vitesse actuelle et ladite première vitesse au dénominateur et **en ce que** ledit deuxième coefficient de pondération ($p_{max}$) est complémentaire à l'unité du premier coefficient de pondération ($p_{min}$).

4. Dispositif observateur selon la revendication 3, **caractérisé en ce que** ledit premier coefficient de pondération ($p_{min}$) est fonction d'un rapport faisant intervenir de plus une troisième vitesse ($v_{min2}$) inférieure à ladite première vitesse ($v_{min}$) et/ou une quatrième vitesse ($v_{max2}$) supérieure à ladite deuxième vitesse ($v_{max}$).

5. Dispositif observateur selon l'une des revendications précédentes, **caractérisé en ce qu'**il comprend en mémoire une liste ordonnée de vitesses préfixées ($v_i$), une liste de matrices optimisée ($L_i$) indexées chacune sur une vitesse préfixée ($v_i$) et un mécanisme numérique pour sélectionner à partir de la vitesse actuelle, d'une part la première vitesse ($v_{min}$) avec la première matrice de gain d'estimation ($L_{min}$) parmi l'une des vitesses préfixées ($v_i$) et d'autre part la deuxième vitesse ($v_{max}$) avec la deuxième matrice de gain d'estimation ($L_{max}$) parmi l'une des vitesses préfixées suivantes ($v_{i+1}$).

6. Dispositif observateur selon la revendication 5, **caractérisé en ce que** ladite liste ordonnée comprend plus de deux vitesses préfixées ($v_i$) l'écart entre une vitesse préfixée ($v_i$) non extrême de la liste ordonnée et la vitesse préfixée ($v_{i+1}$) suivante est supérieur à l'écart entre ladite vitesse préfixée ($v_i$) non extrême de la liste ordonnée et la vitesse préfixée ($v_{i-1}$) précédente.

7. Dispositif observateur selon l'une des revendications précédentes, **caractérisé en ce que** ledit vecteur de mesure actuelle (y) comprend des coordonnées relatives à une vitesse de lacet ($\psi$) et à un angle de braquage ($\delta$) et **en ce que** le vecteur d'état estimé ($\hat{x}$) comprend des coordonnées relatives à la vitesse de lacet ($\dot{\psi}$), à un angle d'écart ($\Psi_{rel}$) relatif à une trajectoire du véhicule (1), à une dérivée temporelle d'angle de braquage ($\dot{\delta}$) et à l'angle de braquage ($\delta$).

8. Dispositif observateur selon l'une des revendications précédentes, **caractérisé en ce qu'**il comprend en mémoire une valeur seuil de vitesse ($v_s$) en deçà de laquelle le suivi de trajectoire du véhicule (1) peut se caler sur une trajectoire de véhicule cible et au-delà de laquelle le suivi de trajectoire du véhicule (1) se cale sur une voie de chaussée.

9. Dispositif observateur selon les revendications 7 et 8, **caractérisé en ce que** pour se caler sur la trajectoire de véhicule cible, ledit vecteur de mesure actuelle (y) comprend de plus au moins une coordonnée relative à un écart latéral ($Y_{CAM}$) du véhicule cible et **en ce que** le vecteur d'état estimé ($\hat{x}$) comprend de plus des coordonnées relatives à une dérivée temporelle ($\dot{Y}_{COG}$) d'écart à une trajectoire de véhicule cible, à un écart ($Y_{COG}$) à la trajectoire du véhicule cible, et à un rayon de courbure ($\rho_{fv}$) de la trajectoire du véhicule cible.

10. Dispositif observateur selon les revendications 7 et 8, **caractérisé en ce que** pour se caler sur la voie de chaussée, ledit vecteur de mesure actuelle (y) comprend de plus des coordonnées relatives à l'angle d'écart ($\Psi_{rel}$) relatif à la

trajectoire du véhicule (1), à l'écart latéral ($Y_{COG}$) à la trajectoire du véhicule (1) de suivi de voie et à l'opposé de l'intégrale temporelle d'écart latéral ($\int$-$Y_{COG}dt$) à la trajectoire, et **en ce que** le vecteur d'état estimé ($\hat{x}$) comprend de plus des coordonnées relatives à une dérivée temporelle ($\dot{Y}_{COG}$) d'écart latéral à la trajectoire du véhicule (1), à l'écart latéral ($Y_{COG}$) à la trajectoire du véhicule (1), et à l'opposé de l'intégrale temporelle d'écart latéral ($\int$-$Y_{COG}dt$) à la trajectoire.

**Patentansprüche**

1. Beobachtungsvorrichtung (2) zum Erzeugen, in Echtzeit, eines Vektors des geschätzten Zustands ($\hat{x}$) der Verfolgung des Weges eines Fahrzeugs (1), das sich mit einer aktuellen Geschwindigkeit ($v_a$) bewegt, aus einer Steuerung (u) und einem Vektor der aktuellen Messung (y), der mit einem Vektor des physischen Zustands (x) der Verfolgung des Weges des Fahrzeugs (1) korreliert ist, ein erstes Modul (4) umfassend, welches in Echtzeit den Vektors des geschätzten Zustands ($\hat{x}$) der Verfolgung des Weges und einen Vektor der geschätzten Messung ($\hat{y}$), der mit dem Vektor des geschätzten Zustands ($\hat{x}$) korreliert ist, berechnet, **dadurch gekennzeichnet, dass** sie umfasst:

   - ein zweites Modul (5), welches in Echtzeit eine zeitliche Veränderung ($\dot{\hat{x}}$) des Vektors des geschätzten Zustands ($\hat{x}$) anpasst, um eine Abweichung zwischen dem Vektor der aktuellen Messung (y) und dem Vektor der geschätzten Messung ($\hat{y}$) zu verringern, indem es die Abweichung mit einer Matrix des Schätzungsgewinns ($L^c$) multipliziert, die durch gewichtete Addition, in Echtzeit, einer ersten Matrix des Schätzungsgewinns ($L_{min}$), die für eine erste Geschwindigkeit ($v_{min}$) optimiert ist, die kleiner oder gleich der aktuellen Geschwindigkeit ($v_a$) ist, und einer zweiten Matrix des Schätzungsgewinns ($L_{max}$), die für eine zweite Geschwindigkeit ($v_{max}$) optimiert ist, die größer oder gleich der aktuellen Geschwindigkeit ($v_a$) ist, berechnet wird, wobei ein erster Gewichtungskoeffizient ($p_{min}$) der ersten Matrix des Schätzungsgewinns ($L_{min}$) von eins bis null abnimmt und ein zweiter Gewichtungskoeffizient ($p_{max}$) der zweiten Matrix des Schätzungsgewinns ($L_{min}$) von null bis eins zunimmt, mit einer Abnahmegeschwindigkeit bzw. einer Zunahmegeschwindigkeit, welche sich nach und nach verringern, wenn sich die aktuelle Geschwindigkeit ($v_a$) von der ersten Geschwindigkeit ($v_{min}$) entfernt, um sich der zweiten Geschwindigkeit ($v_{max}$) zu nähern.

2. Beobachtungsvorrichtung nach Anspruch 1, **dadurch gekennzeichnet, dass** der erste Gewichtungskoeffizient ($p_{min}$) von einem Verhältnis abhängig ist, bei dem eine Differenz ($v_{max}$ - $v_a$) zwischen der zweiten Geschwindigkeit und der aktuellen Geschwindigkeit im Zähler und eine Differenz ($v_{max}$ - $v_{min}$) zwischen der zweiten Geschwindigkeit und der ersten Geschwindigkeit im Nenner verwendet wird, und dadurch, dass der zweite Gewichtungskoeffizient ($p_{max}$) das Komplement zu eins des ersten Gewichtungskoeffizienten ($p_{min}$) ist.

3. Beobachtungsvorrichtung nach Anspruch 1 oder 2, **dadurch gekennzeichnet, dass** der erste Gewichtungskoeffizient ($p_{min}$) von einem Verhältnis abhängig ist, bei dem eine Differenz ($v_{max}$ - $v_a$) zwischen der zweiten Geschwindigkeit und der aktuellen Geschwindigkeit wenigstens im Zähler und wenigstens eine Differenz ($v_a$ - $v_{min}$) zwischen der aktuellen Geschwindigkeit und der ersten Geschwindigkeit im Nenner verwendet wird, und dadurch, dass der zweite Gewichtungskoeffizient ($p_{max}$) das Komplement zu eins des ersten Gewichtungskoeffizienten ($p_{min}$) ist.

4. Beobachtungsvorrichtung nach Anspruch 3, **dadurch gekennzeichnet, dass** der erste Gewichtungskoeffizient ($p_{min}$) von einem Verhältnis abhängig ist, bei dem außerdem eine dritte Geschwindigkeit ($v_{min2}$), die kleiner als die erste Geschwindigkeit ($v_{min}$) ist, und/oder eine vierte Geschwindigkeit ($v_{max2}$), die größer als die zweite Geschwindigkeit ($v_{max}$) ist, verwendet werden.

5. Beobachtungsvorrichtung nach einem der vorhergehenden Ansprüche, **dadurch gekennzeichnet, dass** sie im Speicher eine geordnete Liste von festgelegten Geschwindigkeiten ($v_i$), eine optimierte Liste von Matrizen ($L_i$), die jeweils mit einer festgelegten Geschwindigkeit ($v_i$) gekoppelt sind, und einen numerischen Mechanismus zum Auswählen, anhand der aktuellen Geschwindigkeit, einerseits der ersten Geschwindigkeit ($v_{min}$) mit der ersten Matrix des Schätzungsgewinns ($L_{min}$) aus den festgelegten Geschwindigkeiten ($v_i$) und andererseits der zweiten Geschwindigkeit ($v_{max}$) mit der zweiten Matrix des Schätzungsgewinns ($L_{max}$) aus den folgenden festgelegten Geschwindigkeit ($v_{i+1}$) umfasst.

6. Beobachtungsvorrichtung nach Anspruch 5, **dadurch gekennzeichnet, dass** die geordnete Liste mehr als zwei festgelegte Geschwindigkeiten ($v_i$) umfasst und der Abstand zwischen einer nicht extremen festgelegten Geschwindigkeit ($v_i$) der geordneten Liste und der folgenden festgelegten Geschwindigkeit ($v_{i+1}$) größer als der Abstand zwischen dieser nicht extremen festgelegten Geschwindigkeit ($v_i$) der geordneten Liste und der vorhergehenden

festgelegten Geschwindigkeit ($v_{i-1}$) ist.

7. Beobachtungsvorrichtung nach einem der vorhergehenden Ansprüche, **dadurch gekennzeichnet, dass** der Vektor der aktuellen Messung (y) Koordinaten umfasst, die sich auf eine Giergeschwindigkeit ($\dot{\psi}$) und auf einen Einschlagwinkel ($\delta$) beziehen, und dadurch, dass der Vektor des geschätzten Zustands ($\hat{x}$) Koordinaten umfasst, die sich auf die Giergeschwindigkeit ($\dot{\psi}$), auf einen Abweichungswinkel ($\Psi_{rel}$) in Bezug auf einen Weg des Fahrzeugs (1), auf eine Zeitableitung des Einschlagwinkels ($\dot{\delta}$) und auf den Einschlagwinkel ($\delta$) beziehen.

8. Beobachtungsvorrichtung nach einem der vorhergehenden Ansprüche, **dadurch gekennzeichnet, dass** sie im Speicher einen Schwellenwert der Geschwindigkeit ($v_s$) umfasst, unterhalb von dem die Verfolgung des Weges des Fahrzeugs (1) mit einem Zielfahrzeugweg gekoppelt sein kann und oberhalb von dem die Verfolgung des Weges des Fahrzeugs (1) mit einer Fahrspur gekoppelt ist.

9. Beobachtungsvorrichtung nach den Ansprüchen 7 und 8, **dadurch gekennzeichnet, dass**, um mit dem Zielfahrzeugweg gekoppelt zu werden, der Vektor der aktuellen Messung (y) außerdem wenigstens eine Koordinate umfasst, die sich auf eine seitliche Abweichung ($Y_{CAM}$) des Zielfahrzeugs bezieht, und dadurch, dass der Vektor des geschätzten Zustands ($\hat{x}$) außerdem Koordinaten umfasst, die sich auf eine Zeitableitung ($\dot{Y}_{COG}$) der Abweichung von einem Zielfahrzeugweg, auf eine Abweichung ($Y_{COG}$) vom Weg des Zielfahrzeugs und auf einen Krümmungsradius ($\rho_{fv}$) des Weges des Zielfahrzeugs beziehen.

10. Beobachtungsvorrichtung nach den Ansprüchen 7 und 8, **dadurch gekennzeichnet, dass**, um mit der Fahrspur gekoppelt zu werden, der Vektor der aktuellen Messung (y) außerdem Koordinaten umfasst, die sich auf den Abweichungswinkel ($\Psi_{rel}$) in Bezug auf den Weg des Fahrzeugs (1), auf die seitliche Abweichung ($Y_{COG}$) vom Weg des Fahrzeugs (1) zur Verfolgung der Fahrspur und auf das Zeitintegral der seitlichen Abweichung ($\int -Y_{COG}dt$) vom Weg mit entgegengesetztem Vorzeichen beziehen, und dadurch, dass der Vektor des geschätzten Zustands ($\hat{x}$) außerdem Koordinaten umfasst, die sich auf eine Zeitableitung ($\dot{Y}_{COG}$) der seitlichen Abweichung vom Weg des Fahrzeugs (1), auf die seitliche Abweichung ($Y_{COG}$) vom Weg des Fahrzeugs (1) und auf das Zeitintegral der seitlichen Abweichung ($\int -Y_{COG}dt$) vom Weg mit entgegengesetztem Vorzeichen beziehen.

## Claims

1. Observer device (2) for generating in real time an estimated path-to-follow state vector ($\hat{x}$) for a vehicle (1) moving at a current speed ($v_a$), on the basis of a command (u) and of a current measurement vector (y) that is correlated to a physical path-to-follow state vector (x) of the vehicle (1), comprising a first module (4) that calculates in real time said estimated path-to-follow state vector ($\hat{x}$) and an estimated measurement vector ($\hat{y}$) correlated with the estimated state vector ($\hat{x}$), **characterized in that** it comprises:

   - a second module (5) that adjusts in real time a temporal variation $(\dot{\hat{x}})$ in the estimated state vector ($\hat{x}$) in order to decrease a deviation between said current measurement vector (y) and said estimated measurement vector ($\hat{y}$) by multiplying said deviation by an estimated gain matrix ($L^c$) that is calculated by weighted summation in real time of a first estimated gain matrix ($L_{min}$) that is optimized for a first speed ($v_{min}$) lower than or equal to said current speed ($v_a$) and of a second estimated gain matrix ($L_{max}$) that is optimized for a second speed ($v_{max}$) higher than or equal to said current speed ($v_a$), a first weighting coefficient ($p_{min}$) of the first estimated gain matrix ($L_{min}$) decreasing from one to zero and a second weighting coefficient ($p_{max}$) of the second estimated gain matrix ($L_{max}$) increasing from zero to one, with a rate of decrease and a rate of increase that lessen as said current speed ($v_a$) gets further from the first speed ($v_{min}$) in order to get closer to the second speed ($v_{max}$), respectively.

2. Observer device according to Claim 1, **characterized in that** said first weighting coefficient ($p_{min}$) is dependent on a ratio involving a difference ($v_{max} - v_a$) between said second speed and said current speed in the numerator and a difference ($v_{max} - v_{min}$) between said second speed and said first speed in the denominator and **in that** said second weighting coefficient ($p_{max}$) is the complement to one of the first weighting coefficient ($P_{min}$).

3. Observer device according to Claim 1 or 2, **characterized in that** said first weighting coefficient ($p_{min}$) is dependent on a ratio involving a difference ($v_{max} - v_a$) between said second speed and said current speed at least in the numerator and at least one difference ($v_a - v_{min}$) between said current speed and said first speed in the denominator and **in that** said second weighting coefficient ($p_{max}$) is the complement to one of the first weighting coefficient ($p_{min}$).

4. Observer device according to Claim 3, **characterized in that** said first weighting coefficient ($p_{min}$) is dependent on a ratio in addition involving a third speed ($v_{min2}$) lower than said first speed ($v_{min}$) and/or a fourth speed ($v_{max2}$) higher than said second speed ($v_{max}$).

5. Observer device according to one of the preceding claims, **characterized in that** it comprises, in memory, an ordered list of preset speeds ($v_i$), an optimized list ($L_i$) of matrices that are each indexed to a preset speed ($v_i$) and a digital mechanism for selecting, on the basis of the current speed, on the one hand the first speed ($v_{min}$) with the first estimated gain matrix ($L_{min}$) from among one of the preset speeds ($v_i$) and on the other hand the second speed ($v_{max}$) with the second estimated gain matrix ($L_{max}$) from among one of the following preset speeds ($v_{i+1}$).

6. Observer device according to Claim 5, **characterized in that** said ordered list comprises more than two preset speeds ($v_i$) the difference between a non-extreme preset speed ($v_i$) of the ordered list and the following preset speed ($v_{i+1}$) being larger than the difference between said non-extreme preset speed ($v_i$) of the ordered list and the preceding preset speed ($v_{i-1}$).

7. Observer device according to one of the preceding claims, **characterized in that** said current measurement vector ($y$) comprises coordinates relative to a yaw speed ($\dot{\psi}$) and to a steering angle ($\delta$) and **in that** the estimated state vector ($\hat{x}$) comprises coordinates relative to the yaw speed ($\dot{\psi}$), to an angle ($\Psi_{rel}$) of relative deviation from a path of the vehicle (1), to a temporal derivative ($\dot{\delta}$) of steering angle and to the steering angle ($\delta$).

8. Observer device according to one of the preceding claims, **characterized in that** it comprises, in memory, a speed threshold value ($v_s$) below which the path to follow of the vehicle (1) may be locked onto a target-vehicle path and above which the path to follow of the vehicle (1) is locked onto a road lane.

9. Observer device according to Claims 7 and 8, **characterized in that**, to lock onto the target-vehicle path, said current measurement vector ($y$) in addition comprises at least one coordinate relative to a lateral deviation ($Y_{CAM}$) of the target vehicle and **in that** the estimated state vector ($\hat{x}$) in addition comprises coordinates relative to a temporal derivative ($\dot{Y}_{COG}$) of deviation from a target-vehicle path, to a deviation ($Y_{COG}$) from the path of the target vehicle, and to a radius of curvature ($\rho_{fv}$) of the path of the target vehicle.

10. Observer device according to Claims 7 and 8, **characterized in that**, to lock onto the road lane, said current measurement vector ($y$) in addition comprises coordinates relative to the angle ($\Psi_{rel}$) of relative deviation from the path of the vehicle (1), to the lateral deviation ($Y_{COG}$) from the path of the lane-following vehicle (1) and to the opposite of the temporal integral ($\int -Y_{COG}dt$) of the lateral deviation from the path, and **in that** the estimated state vector ($\hat{x}$) in addition comprises coordinates relative to a temporal derivative ($\dot{Y}_{COG}$) of lateral deviation from the path of the vehicle (1), to the lateral deviation ($Y_{COG}$) from the path of the vehicle (1), and to the opposite of the temporal integral ($\int -Y_{COG}dt$) of lateral deviation from the path.

Fig. 1

*Fig. 2*

Fig. 3

Fig. 4

## RÉFÉRENCES CITÉES DANS LA DESCRIPTION

**Documents brevets cités dans la description**

- EP 0723902 B1
- US 7908112 B
- WO 2013178899 A2
- FR 2925005
- WO 2012084465 A
- FR 1255068
- FR 1255188
- FR 12563339
- US 6000661 A